# EUROPÄISCHE PATENTSCHRIFT

(11) **EP 1 637 439 B1**
(45) Veröffentlichungstag und Bekanntmachung des Hinweises auf die Patenterteilung: **06.06.2007**
(21) Anmeldenummer: 05018999.2
(22) Anmeldetag: 01.09.2005
(51) Int. Cl.: B62D 25/06, B60J 7/00, B62D 29/00

(54) **Fahrzeugkarosserieanbauteil, insbesondere Fahrzeugdachpaneel**
Bodywork component, especially vehicle roof panel
Elément de carrosserie, en particulier panneau de toit de véhicule

(30) Priorität: 15.09.2004 DE 102004044670
(43) Veröffentlichungstag der Anmeldung: 22.03.2006
(73) Patentinhaber: ArvinMeritor GmbH, 63128 Dietzenbach (DE)
(72) Erfinder: Schönebeck, Horst, 63571 Gelnhausen (DE)
(74) Vertreter: Kitzhofer, Thomas

(56) Entgegenhaltungen:
- EP-A- 0 978 399
- DE-A1- 10 039 522
- DE-U1- 20 316 000
- US-A1- 2004 105 960

## Beschreibung

Die Erfindung betrifft ein Fahrzeugkarosserieanbauteil, insbesondere ein Fahrzeugdachpaneel, nach dem Oberbegriff des Anspruchs 1.

Karosserieanbauteile für ein Fahrzeug sind solche Teile, die an der Fahrzeugkarosserie angebracht werden und die Außenhaut des Fahrzeugs im fertig montiertem Zustand wenigstens abschnittsweise definieren und von außen sichtbar sind. Karosserieanbauteile können Klappen (Türen, Deckel), Stoßfänger oder Dachmodule sein. Fahrzeugdachpaneele sind insbesondere Dachmodule oder Deckel für Dachöffnungssysteme.

Es ist bereits bekannt, geschäumte Fahrzeugkarosserieanbauteile wie Dachmodule oder Klappen mit einem glasfaserverstärkten PU-Material herzustellen, wobei Glasfaserabschnitte beispielsweise im sogenannten LFI (Long Fibre Injection)-Verfahren in den Kunststoff eingebracht werden.

Aus der DE 196 37 793 C1 ist ein mit PU-Material hinterschäumter Glasdeckel eines Dachöffnungssystems bekannt, wobei Füllkörper eingeschäumt sind, die vollständig aus Polyurethan, Styropor oder Kunststoff bestehen. Ein ebenfalls eingeschäumtes offenes Profil soll der Verstärkung dienen. Glasfaserabschnitte sind nicht in dem PU-Material enthalten.

Die EP 0 598 352 B1 offenbart langgestreckte, nach oben offene Einlegerteile eines Glasdeckels eines Dachöffnungssystems, die in der Hinterschäumung eingebettet sind. Diese Einlegerteile werden vorgespannt eingelegt und versteifen dabei den Glasdeckel. Sie ermöglichen so ein einfacheres Erreichen der gewünschten Wölbung.

Die DE 100 39 522 A1, die im Oberbegriff des Anspruchs 1 definierten Merkmale offenbart, zeigt ein aussteifendes Hohlprofil, das in einer Innenschale eingebettet ist. Die Innenschale ist an eine die Außenschale des Dachmoduls bildende Dachhaut angeschäumt.

Aus der EP 0 978 399 A1 ist ein umlaufender und damit geschlossener Verstärkungsrahmen in Form eines Hohlprofils bekannt.

Die US 2004/0105960 A1 beschreibt ein Hohlprofil, das durch separate Verschlußkörper geschlossen ist. Die Verschlußkörper haben Fortsätze, die in eine geschäumte Schicht hineinragen.

Bei Fahrzeugkarosserieanbauteilen kann es aufgrund von unterschiedlichen Materialstärken der Innenschicht und dem damit verbundenen abschnittsweise unterschiedlichen Ausdehnungs- und Schwundverhalten zu einer Beeinträchtigung der Oberflächenqualität kommen.

Die Erfindung schafft ein Fahrzeugkarosserieanbauteil, das eine sehr gute Oberflächenqualität aufweist.

Dies wird bei dem eingangs genannten Fahrzeugkarosserieanbauteil dadurch mit den Merkmalen des Anspruchs 1 erreicht. Die mit der Erfindung erzielten Vorteile bestehen insbesondere darin, daß ein unterschiedliches Ausdehungs- und Schwundverhalten des Hinterschäummaterials durch die Einlage des Hohlkörpers verhindert wird, wobei der PU-Schaum nicht in den Hohlkörper gelangen kann. Durch den Hohlkörper wird das Karosserieanbauteil versteift, und die Menge des flüssigen Kunststoffs im Bereich des Hohlkörpers wird verringert, so daß sich geringere Ausdehnungen und ein geringerer Schwund als ohne Hohlkörper ergeben. Dadurch werden Beeinträchtigungen der Oberflächenqualität verhindert. Da die Innenschicht den Hohlkörper allseitig umgibt, ist dieser sicher in der Innenschicht eingebettet und verstärkt das Karosserieanbauteil in alle Richtungen. Der Hohlkörper ist ein Hohlprofil, das stirnseitig durch separate Verschlußkörper geschlossen ist. Da das Hohlprofil geschlossen ist, kann beim Hinterschäumvorgang kein PU-Material in das Hohlprofil gelangen, was den partiell unterschiedlichen Volumenschwund verhindert.

Der Verschlußkörper weist abstehende Fortsätze auf, die in die Innenschicht hineinragen und ihn somit fixieren. Die Fortsätze reichen bis zum Außenteil und erstrecken sich bis zur Außenseite der Innenschicht. Die Fortsätze gewährleisten so eine sichere Fixierung des Hohlkörpers in der Schäumform beim Hinterschäumen.

Vorzugsweise ist der Hohlkörper über Abstandshalter von dem Außenteil beabstandet, um einen reproduzierbaren Abstand zwischen Hohlkörper und Außenhaut zu erreichen.

Der gesamte Raum zwischen dem Außenteil und dem Hohlkörper, über dessen gesamte Längserstreckung, ist gemäß einer Ausführungsform von der Innenschicht gefüllt. Die Stabilität wird dadurch verbessert.

Vorzugsweise erstreckt sich die Innenschicht bis zum Rand des Außenteils und deckt die Seitenflächen wenigstens abschnittsweise ab. Insbesondere läuft die Innenschicht längs der Seitenflächen um das gesamte Außenteil.

Vorzugsweise weist der Hohlkörper eine starre Außenwand auf, indem er z.B. aus Metall ist.

Das Karosserieanbauteil ist vorzugsweise ein Deckel für ein Dachöffnungssystem. Dabei kann es sich bei dem Dachöffnungssystem um ein sogenanntes Schiebehebedach handeln, bei dem der Deckel beim Zurückfahren unter die feste Dachhaut bewegt wird, oder um ein sogenanntes Spoilerdach, bei dem der Deckel über die Dachhaut verschoben wird. Der Deckel ist insbesondere ein Glasdeckel.

Der Hohlkörper erstreckt sich bevorzugt längs einer Querseite des Deckels.Weitere Merkmale und Vorteile der Erfindung ergeben sich aus der nachfolgenden Beschreibung und den Zeichnungen. Die Erfindung wird nachfolgend anhand der bevorzugten Ausführungsform beschrieben, die in den Zeichnungen dargestellt ist. In den Zeichnungen zeigen:
- Figur 1 eine schematische Perspektivansicht eines Fahrzeugdachs mit einem erfindungsgemäßen Fahrzeugkarosserieanbauteil in Form eines Fahrzeugdachpaneels,
- Figur 2 eine vergrößerte Schnittansicht durch das Fahrzeugkarosserieanbauteil entlang der Linie II-II in Fig. 1,
- Figur 3 eine vergrößerte Schnittansicht durch das Fahrzeugkarosserieanbauteil entlang der Linie III-III in Fig. 1, und
- Figur 4 eine Schnittansicht durch das Fahrzeugkarosserieanbauteil in einer zweiten Ausführungsform entlang der Linie IV-IV in Figur 1.

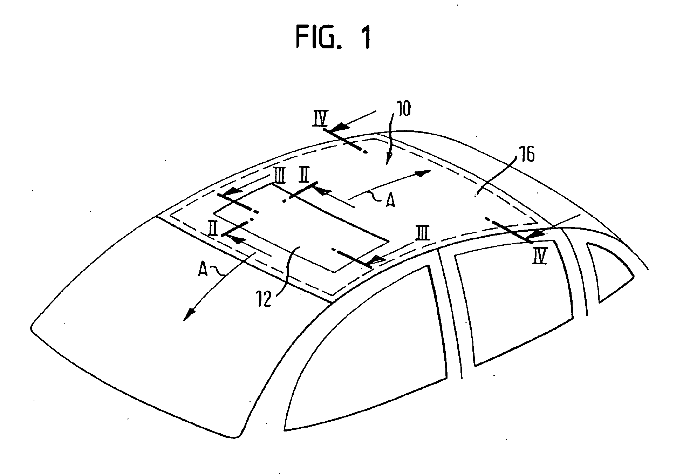

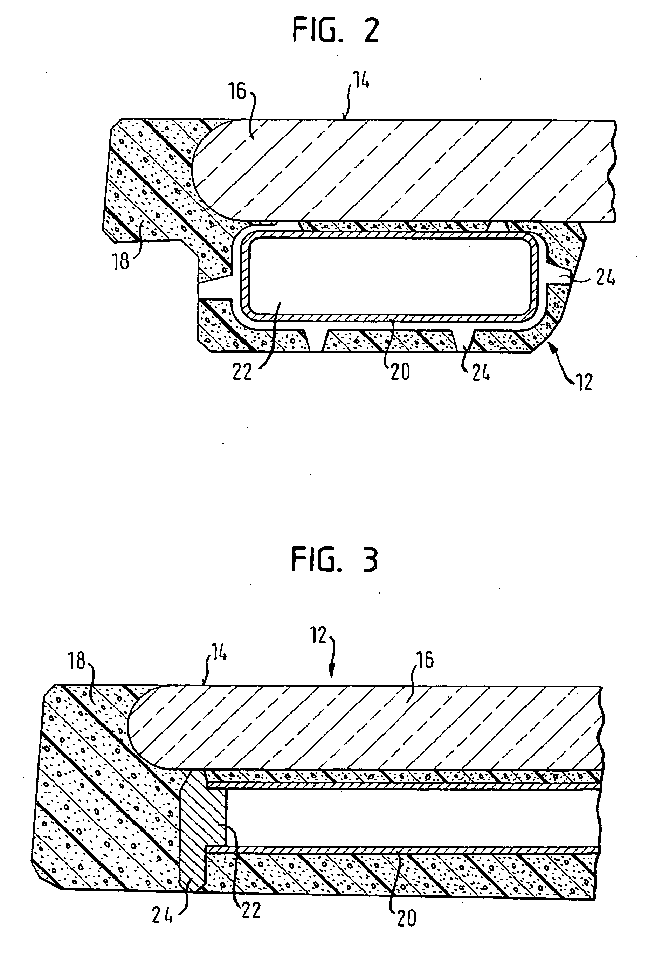

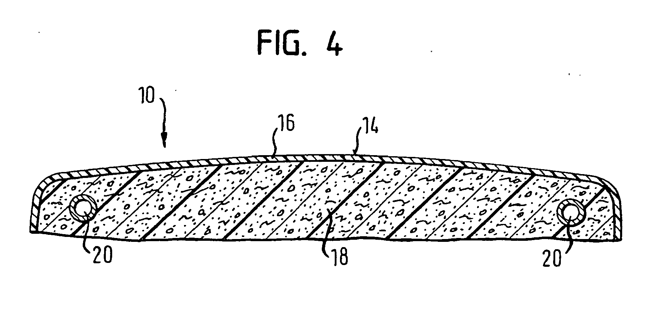

Figur 1 zeigt ein Fahrzeugkarosserieanbauteil, in Form eines Fahrzeugdachpaneels. Bei dem Fahrzeugdachpaneel kann es sich um ein Dachmodul 10 (Figur 4) oder einen Deckel 12 eines öffnungsfähigen Fahrzeugdachs (Figuren 2 und 3) handeln.

Im folgenden wird die Ausführungsform in den Figuren 2 und 3 näher erläutert. Hier wird, wie gesagt, das Fahrzeugdachpaneel durch den ausstellbaren und beweglichen Deckel 12 gebildet. Der Deckel 12 bildet auch einen Teil der Außenhaut des Fahrzeugs, wenn er die Dachöffnung schließt. Die Außenhaut ist derjenige Teil des Fahrzeugs, der von außen im geschlossenen Zustand der Dachöffnung sichtbar ist. Der Deckel 12 hat eine Außenseite 14, die die Außenhaut teilweise definiert und die Oberseite des Deckels 12 darstellt.

Der Deckel 12 besitzt ein Außenteil 16 in Form eines Glaspanels, das mit PU-Material hinterschäumt ist. Dieses PU-Material bildet eine sogenannte Innenschicht 18. Die Innenschicht 18 ist bei der gezeigten Ausführungsform so ausgeführt, daß sie auch noch teilweise über den Außenrand des Außenteils 16 seitlich nach oben ragt und am Rand auch noch einen Teil der Außenseite 14 des Deckels 12 bildet. Die Innenschicht 18 erstreckt sich seitlich über das Außenteil 16 hinweg und deckt dessen Rand vorzugsweise komplett umlaufend ab, d.h. die abgerundeten Seitenflächen werden von der Innenschicht bedeckt.

In die Innenschicht 18 sind keine Glasfaserabschnitte eingebracht, zumindest nicht in der gezeigten Ausführungsform. Zur Versteifung des Deckels 12 sind hier in Fahrzeuglängsrichtung, die als Achse A-A in Figur 1 gezeigt ist, verlaufende Hohlkörper 20 in die Innenschicht 18 eingebettet, wobei die Hohlkörper 20 vollständig unter dem als Glaspaneel ausgebildeten Außenteil 16 angeordnet sind. Die Hohlkörper 20 sind Hohlprofile (Rohre) mit einer starren Außenwand aus Metall, die stirnseitig durch Verschlußkörper 22 vollständig geschlossen sind, so daß kein Kunststoff beim Hinterschäumen in die Hohlkörper 20 gelangt. Die Verschlußkörper 22 können aus Kunststoff sein und besitzen Nuten oder Einkerbungen, damit sie bei dem durch das Hinterschäumen entstehenden Druck sicher am Hohlkörper 20 befestigt bleiben und diesen schließen, und sie haben darüber hinaus Fortsätze 24, die sich einerseits bis zur Rückseite des Außenteils 16 erstrecken und andererseits bis zur Anlage an die Rückseite der Innenschicht 18. Die Fortsätze 24 sind dabei von dem Hohlkörper 20 weg konisch zulaufend ausgebildet. Dies erlaubt es, die Verschlußkörper 22 samt des Hohlkörpers 20 in das Schäum- oder Spritzwerkzeug zu legen, darin zu befestigen und zu fixieren, so daß die Fortsätze 24 als Abstandshalter für den Hohlkörper 20 wirken. Die Fortsätze 24 erstrecken sich also, wie in den Figuren 2 und 3 gezeigt, in die Innenschicht 18, wodurch die Verschlußkörper 22 und der formschlüssig mit den Verschlußkörpern 22 verbundene Hohlkörper 20 sicher in der Innenschicht 18 eingebettet ist. Jeder Hohlkörper 20 ist dabei allseitig von der Innenschicht 18 umschlossen, womit er in allen Richtungen einen Verbund mit der Innenschicht 18 bildet und den Deckel 12 versteift. Der komplette Raum zwischen der Rückseite des Außenteils 16 und dem Hohlkörper 20 ist über die gesamte Länge des Hohlkörpers 20 von der Innenschicht 18 gefüllt.

Bei der Ausführungsform nach Figur 4 ist das Fahrzeugkarosserieanbauteil ein Dachmodul 10. Das Außenteil 16 wird durch eine zweischichtige Koextrusionsfolie definiert, die die Außenhaut des Fahrzeugs abschnittsweise bildet und durch Tiefziehen plastisch verformt ist. Die Koextrusionsfolie ist darüber hinaus durchgefärbt, damit eine außenseitige Lackierung des Dachmoduls 10 entfallen kann. Wie bei den Figuren 2 und 3 ist auch das Außenteil 16 gemäß Figur 4 hinterschäumt. Durch das Hinterschäumen wird eine Innenschicht 18 gebildet, die aus PU-Material besteht, wobei in das PU-Material mittels des LFI-Verfahrens (Long Fiber Injection) Glasfaserabschnitte zur Stabilisierung eingebracht werden.

Bei der Ausführungsform nach Figur 4 ist der Hohlkörper 20 mit einem runden Querschnitt versehen, er besteht ebenfalls aus Metall und wird stirnseitig durch Verschlußkörper 22 (nicht gezeigt) geschlossen, die wie oben beschrieben ausgeführt sind und dieselbe Funktion erfüllen. Auch hier weisen die Verschlußkörper 22 Fortsätze auf (nicht gezeigt), die denen des ersten Ausführungsbeispiels aber entsprechen und dieselbe Funktion innehaben.

### Bezugszeichenliste

- 10:: Dachmodul
- 12:: Deckel
- 14:: Außenseite
- 16:: Außenteil
- 18:: Innenschicht
- 20:: Hohlkörper
- 22:: Verschlußkörper
- 24:: Fortsätze

## Patentansprüche

1. Fahrzeugkarosserieanbauteil, insbesondere Fahrzeugdachpaneel, mit
einem zumindest einen Abschnitt einer Außenhaut definierenden Außenteil (16), einer durch Hinterschäumen rückseitig des Außenteils (16) gebildeten Innenschicht (18) aus Kunststoff und wenigstens einem in der Innenschicht (18) eingebetteten, langgestreckten, rohrförmigen Hohlkörper (20),
**dadurch gekennzeichnet, daß**
der Hohlkörper (20) allseitig geschlossen ist, allseitig von der Innenschicht (18) umschlossen ist und ein Hohlprofil ist, das stirnseitig durch separate Verschlußkörper (22) geschlossen ist, wobei die Verschlußkörper (22) Fortsätze (24) aufweisen, die in die Innenschicht (18) hineinragen, bis zum Außenteil (16) reichen und sich bis zur Außenseite der Innenschicht (18) erstrecken.

2. Fahrzeugkarosserieanbauteil nach Anspruch 1, **dadurch gekennzeichnet, daß** der Hohlkörper (20) über Abstandshalter von dem Außenteil (16) beabstandet ist.

3. Fahrzeugkarosserieanbauteil nach Anspruch 1 oder 2, **dadurch gekennzeichnet, daß** der gesamte zwischen dem Außenteil (16) und dem Hohlkörper (20) liegende Raum über die gesamte Länge des Hohlkörpers (20) von der Innenschicht (18) gefüllt ist.

4. Fahrzeugkarosserieanbauteil nach einem der vorhergehenden Ansprüche, **dadurch gekennzeichnet, daß** die Innenschicht (18) randseitig wenigstens abschnittsweise das Außenteil (16) abdeckt.

5. Fahrzeugkarosserieanbauteil nach einem der vorhergehenden Ansprüche, **dadurch gekennzeichnet, daß** der Hohlkörper (20) eine starre Außenwand aufweist.

6. Fahrzeugkarosserieanbauteil nach einem der vorhergehenden Ansprüche, **dadurch gekennzeichnet, daß** das Karosserieanbauteil ein Deckel (12) für ein Dachöffnungssystem ist.

7. Fahrzeugkarosserieanbauteil nach Anspruch 6, **dadurch gekennzeichnet, daß** der Hohlkörper (20) sich längs einer Querseite des Deckels (12) erstreckt.

## Claims

1. A vehicle body panel part, particularly a vehicle roof panel, comprising
an outer part (16) defining at least a portion of an outer skin, an inner layer (18) made of plastic and formed by back foaming on the rear side of the outer part (16), and at least one elongated, tubular hollow body (20) embedded in the inner layer (18),
**characterized in that**
the hollow body (20) is closed all around, is surrounded by the inner layer (18) all around, and is a hollow profile which is closed by separate closure bodies (22) on the end faces, the closure bodies (22) having prolongations (24) that project into the inner layer (18) and extend as far as to the outer part (16) and to the outer face of the inner layer (18).

2. The vehicle body panel part according to claim 1, **characterized in that** the hollow body (20) is distanced from the outer part (16) by spacers.

3. The vehicle body panel part according to claim 1 or 2, **characterized in that** the entire space between the outer part (16) and the hollow body (20) is filled with the inner layer (18) along the entire length of the hollow body (20).

4. The vehicle body panel part according to any of the preceding claims, **characterized in that** the inner layer (18) at least partly covers the side faces of the outer part (16).

5. The vehicle body panel part according to any of the preceding claims, **characterized in that** the hollow body (20) has a rigid outer wall.

6. The vehicle body panel part according to any of the preceding claims, **characterized in that** the body panel part is a cover (12) for a roof opening system.

7. The vehicle body panel part according to claim 6, **characterized in that** the hollow body (20) extends along a transverse side of the cover (12).

## Revendications

1. Composant à rapporter sur une carrosserie de véhicule, en particulier panneau de toit de véhicule, comprenant
une pièce extérieure (16) définissant au moins un tronçon d'une peau extérieure, une couche intérieure (18) en matière plastique, formée par surmoulage par moussage sur le côté postérieur de la pièce extérieure (16), et au moins un corps creux (20) allongé et tubulaire noyé dans la couche intérieure (18),
**caractérisé en ce que**
le corps creux (20) est fermé sur tous les côtés, est entouré sur tous les côtés par la couche intérieure (18) et est un profil creux fermé sur le côté face frontale par des corps de fermeture (22) séparés, les corps de fermeture (22) comprenant des prolongements (24) qui font saillie dans la couche intérieure (18) et s'étendent jusqu'à la pièce extérieure (16) et jusqu'au côté extérieur de la couche intérieure (18).

2. Composant à rapporter sur une carrosserie de véhicule selon la revendication 1, **caractérisé en ce que** le corps creux (20) est espacé de la pièce extérieure (16) au moyen d'écarteurs.

3. Composant à rapporter sur une carrosserie de véhicule selon la revendication 1 ou 2, **caractérisé en ce que** tout l'espace se trouvant entre la pièce extérieure (16) et le corps creux (20) est rempli par la couche intérieure (18) sur toute la longueur du corps creux (20).

4. Composant à rapporter sur une carrosserie de véhicule selon l'une des revendications précédentes, **caractérisé en ce que** la couche intérieure (18) recouvre le bord de la pièce extérieure (16) au moins sur certaines portions.

5. Composant à rapporter sur une carrosserie de véhicule selon l'une des revendications précédentes, **caractérisé en ce que** le corps creux (20) comprend une paroi extérieure rigide.

6. Composant à rapporter sur une carrosserie de véhicule selon l'une des revendications précédentes, **caractérisé en ce que** le composant à rapporter sur une carrosserie est un couvercle (12) pour un système d'ouverture du toit.

7. Composant à rapporter sur une carrosserie de véhicule selon la revendication 6, **caractérisé en ce que** le corps creux (20) s'étend le long d'un côté transversal du couvercle (12).
